# EUROPÄISCHE PATENTSCHRIFT

(11) **EP 3 225 444 B1**
(45) Veröffentlichungstag und Bekanntmachung des Hinweises auf die Patenterteilung: **27.03.2019**
(21) Anmeldenummer: 17168116.6
(22) Anmeldetag: 29.06.2016
(51) Int. Cl.: B60J 7/12, B60J 7/20

(54) **VERDECK MIT ABLAGERAUMDECKEL**
SOFT TOP WITH STORAGE SPACE LID
CAPOTE COMPRENANT UN COUVERCLE DE RANGEMENT

(30) Priorität: 02.07.2015 DE 102015110692
(43) Veröffentlichungstag der Anmeldung: 04.10.2017
(62) Teilanmeldung aus: 16176874.2
(73) Patentinhaber: Webasto-Edscha Cabrio GmbH, 82131 Stockdorf (DE)
(72) Erfinder: KOPP, Georg, 82131 Stockdorf (DE); HABERL, Franz, 82131 Stockdorf (DE)
(74) Vertreter: advotec.

(56) Entgegenhaltungen:
- EP-A2- 1 826 049
- DE-A1-102005 033 537
- DE-C1- 10 157 818
- US-B1- 6 682 149

## Beschreibung

Die Erfindung betrifft ein Verdeck eines Cabriolet-Fahrzeugs mit den Merkmalen des Oberbegriffs des Patentanspruchs 1.

Ein derartiges Verdeck ist aus der Praxis bekannt und kann als Faltverdeck mit einem faltbaren Verdeckbezug oder auch als Klappverdeck bzw. RHT (retractable hard top) mit starren Verdeckschalen ausgebildet sein. Das Verdeck umfasst ein Verdeckgestänge, mittels dessen je nach Ausführung der Verdeckbezug aufgespannt werden kann oder die starren Verdeckschalen verstellt werden können. Das Verdeckgestänge ist zwischen einer einen Fahrzeuginnenraum des betreffenden Fahrzeugs überspannenden Schließstellung und einer Ablagestellung verstellbar, in der der Fahrzeuginnenraum nach oben freigegeben ist und das Verdeckgestänge in einem heckseitigen Verdeckablageraum des betreffenden Fahrzeugs abgelegt ist. In der Regel ist der Verdeckablageraum mittels eines verstellbaren Ablageraumdeckels verschließbar, der in der Schließstellung des Verdecks eine im Fahrzeuginnenraum angeordnete Hutablage bilden kann und der bezogen auf eine vertikale Verdecklängsmittelebene beidseits jeweils über eine Lenkeranordnung an einem fahrzeugfesten Hauptlager schwenkbar gelagert ist. Das Verdeckgestänge weist bezogen auf die vertikale Verdecklängsmittelebene beidseits jeweils eine Gestängeanordnung auf, die ebenfalls an dem jeweiligen fahrzeugfesten Hauptlager schwenkbar gelagert ist und mittels eines an dem Hauptlager angeordneten Hauptantriebs antreibbar ist. Zum Verstellen des Ablageraumdeckels wird bisher ein separater Antriebsmotor vorgehalten, was einerseits Kosten verursacht und andererseits bauraumintensiv ist.

EP 1 826 049 A2 offenbart ein Verdeck eines Cabriolet-Fahrzeugs mit den Merkmalen des Oberbegriffs des Patentanspruchs 1.

Aus der Druckschrift US 6,682,149 B1 ist ein Cabriolet-Fahrzeug bekannt, das ein Verdeck und einen Ablageraumdeckel umfasst. Beidseits des Ablageraumdeckels ist jeweils eine Gestängeaustrittsklappe angeordnet, die an einen Schwenkarm gelagert ist, der gegenüber dem Fahrzeugaufbau verschwenkbar ist.

Der Erfindung liegt die Aufgabe zugrunde, ein Verdeck der einleitend genannten Gattung zu schaffen, bei dem diese Nachteile beseitigt sind.

Diese Aufgabe ist erfindungsgemäß durch das Verdeck mit den Merkmalen des Patentanspruchs 1 gelöst.

Die Erfindung hat also ein Verdeck eines Cabriolet-Fahrzeugs zum Gegenstand, das ein Verdeckgestänge umfasst, das zwischen einer einen Fahrzeuginnenraum überspannenden Schließstellung und einer Ablagestellung verstellbar ist, in der der Fahrzeuginnenraum nach oben freigegeben ist und das Verdeckgestänge in einem heckseitigen Ablageraum abgelegt ist, der mittels eines verstellbaren Ablageraumdeckels verschließbar ist, der bezogen auf eine vertikale Verdecklängsmittelebene beidseits jeweils mit einer Gestängeaustrittsklappe versehen ist, die zwischen einer nach unten weggeklappten Durchlassstellung und einer nach oben geklappten Abdeckstellung verstellbar ist. Das Verdeckgestänge weist bezogen auf die vertikale Verdecklängsmittelebene beidseits jeweils eine Gestängeanordnung auf, die an einem jeweiligen fahrzeugfesten Hauptlager schwenkbar gelagert ist. Der Verdeckkastendeckel umfasst eine Basiskonstruktion und eine gegenüber der Basiskonstruktion verschwenkbare Deckplatte, wobei die Deckplatte und die Gestängeaustrittsklappen mittels eines gemeinsamen Antriebsmotors gegenüber der Basiskonstruktion verschwenkbar sind.

Bei diesem Verdeck hat also der Antriebsmotor eine Mehrfachfunktion, nämlich die Verstellfunktion für die Deckplatte und die Verstellfunktion für die Gestängeaustrittsklappen gegenüber der Basiskonstruktion.

Unter einer Basiskonstruktion ist im Sinne der Erfindung eine Unterkonstruktion des Ablageraumdeckels zu verstehen, an der die Deckplatte und gegebenenfalls auch die Gestängeaustrittsklappen gelagert werden können. Die Basiskonstruktion kann eine Platte im eigentlichen Sinne sein, aber auch eine Gitterkonstruktion oder dergleichen, die Lagerpunkte für die anderen Bauelemente des Ablageraumdeckels, wie die Gestängeaustrittsklappen und die Deckplatte, und für die Lenkeranordnung zur Anbindung des Ablageraumdeckels an die Hauptlager aufweist.

Der Antriebsmotor, der an der Basiskonstruktion angeordnet sein kann, ist vorzugsweise jeweils über eine Schubstange mit den Gestängeaustrittsklappen und mit der Deckplatte verbunden.

Um eine dreidimensionale Bewegung der Schubstangen zu ermöglichen, sind die Schubstangen vorzugsweise jeweils über einen Kugelkopf an einem Kupplungselement einer Antriebswelle des Antriebsmotors angebunden. Denkbar ist es natürlich auch, dass die Schubstangen mit einem Kreuzgelenk oder dergleichen versehen sind.

Um eine Untersetzung für die Stellbewegung der Deckplatte zu erreichen, kann die Schubstange für die Deckplatte mit einer Stelllenkeranordnung verbunden sein, die einerseits an der Basiskonstruktion und andererseits an der Deckplatte angelenkt ist.

Weitere Vorteile und vorteilhafte Ausgestaltungen des Gegenstandes der Erfindung sind der Beschreibung, der Zeichnung und den Patentansprüche entnehmbar.

Ein Ausführungsbeispiel eines Verdecks nach der Erfindung ist in der Zeichnung schematisch vereinfacht dargestellt und wird in der nachfolgenden Beschreibung näher erläutert. Es zeigt:
- Figur 1: eine perspektivische Teilansicht eines Faltverdecks nach der Erfindung in dessen Schließstellung;
- Figur 2: eine perspektivische Darstellung des Faltverdecks nach Figur 1 in seiner Ablagestellung;
- Figur 3: eine Seitenansicht des Faltverdecks in dessen Schließstellung;

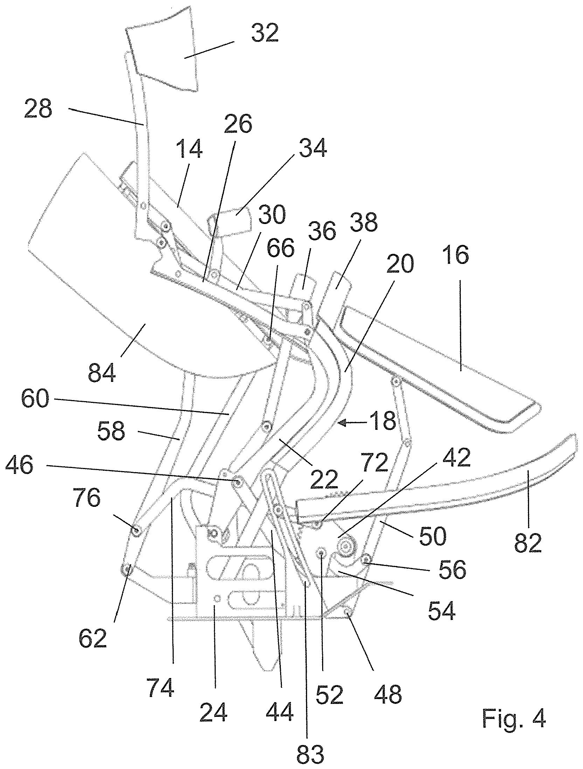

- Figur 4: eine Seitenansicht des Faltverdecks nach Figur 1 in einer ersten Zwischenstellung beim Verstellen;

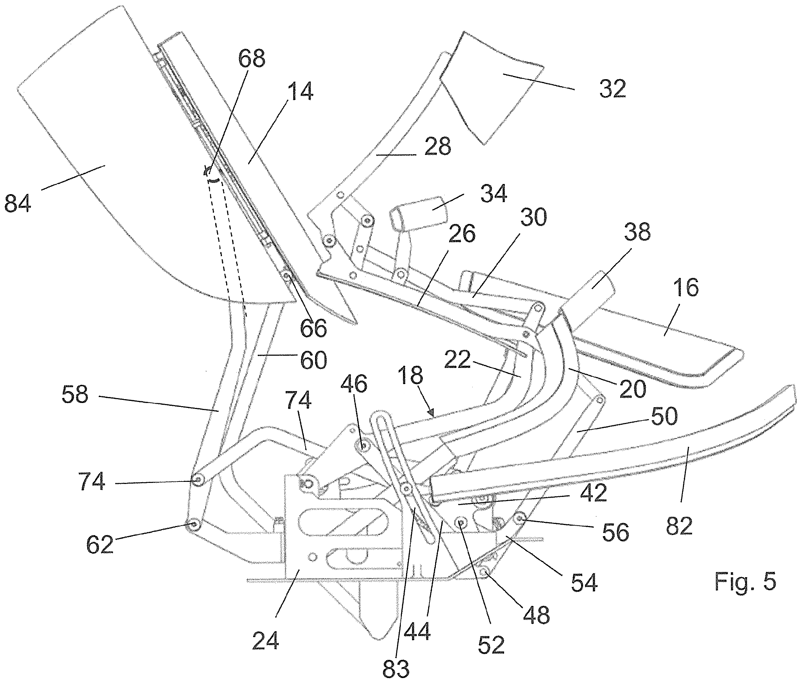

- Figur 5: eine Seitenansicht des Faltverdecks nach Figur 1 in einer zweiten Zwischenstellung beim Verstellen;

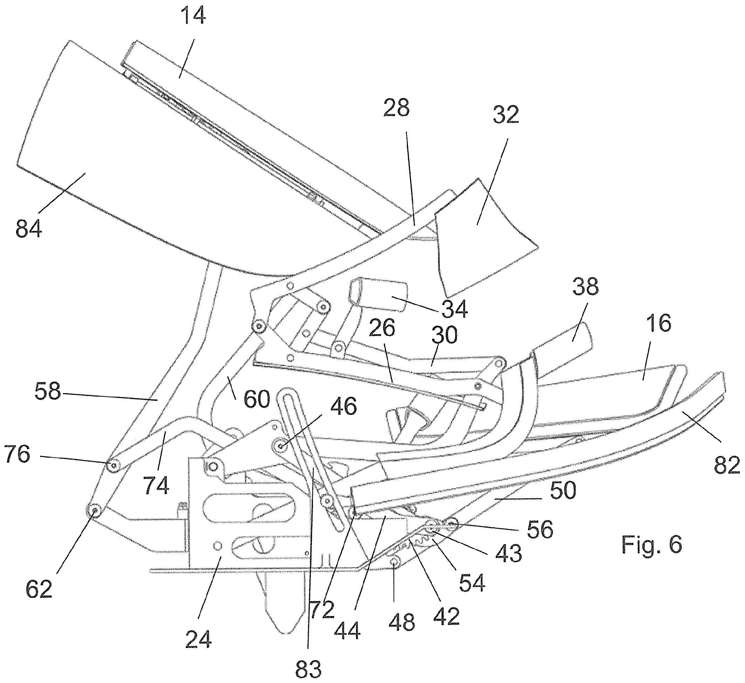

- Figur 6: eine Seitenansicht des Faltverdecks nach Figur 1 in einer dritten Zwischenstellung beim Verstellen;
- Figur 7: eine Seitenansicht des Faltverdecks nach Figur 1 in einer Ablagestellung;
- Figur 8: eine perspektivische Innenansicht des Faltverdecks nach Figur 1 in dessen Schließstellung; und

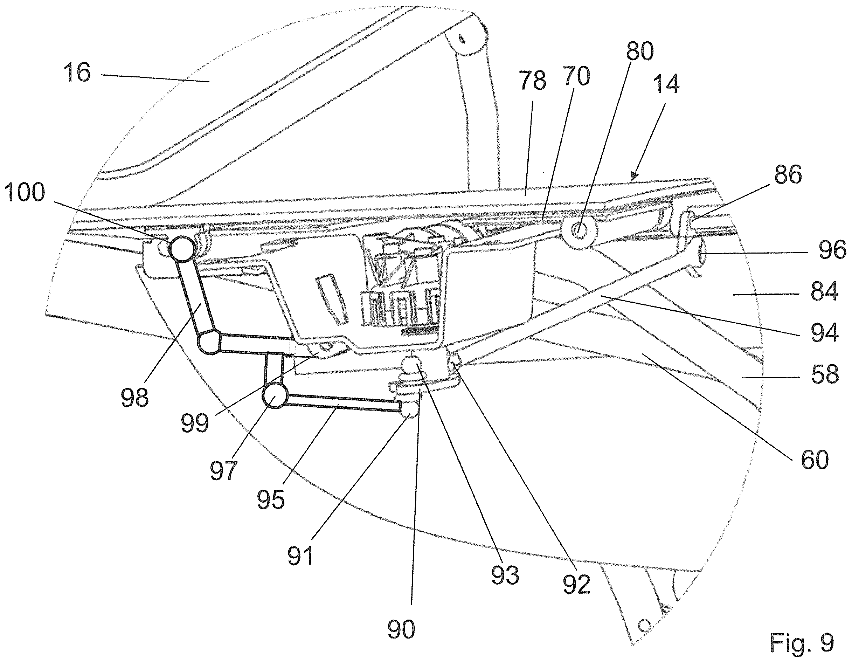

- Figur 9: eine perspektivische Unteransicht eines Ablageraumdeckels des Faltverdecks.

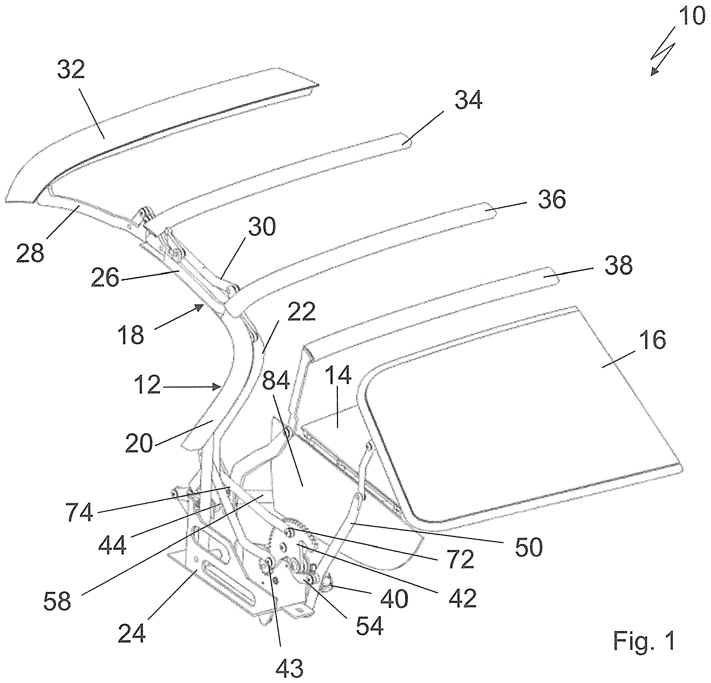

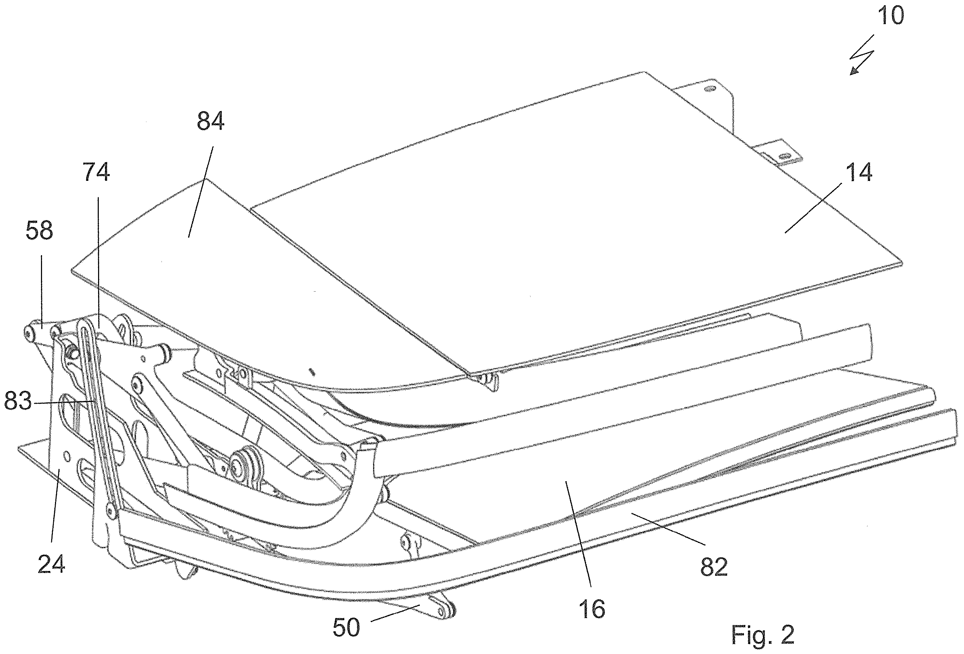

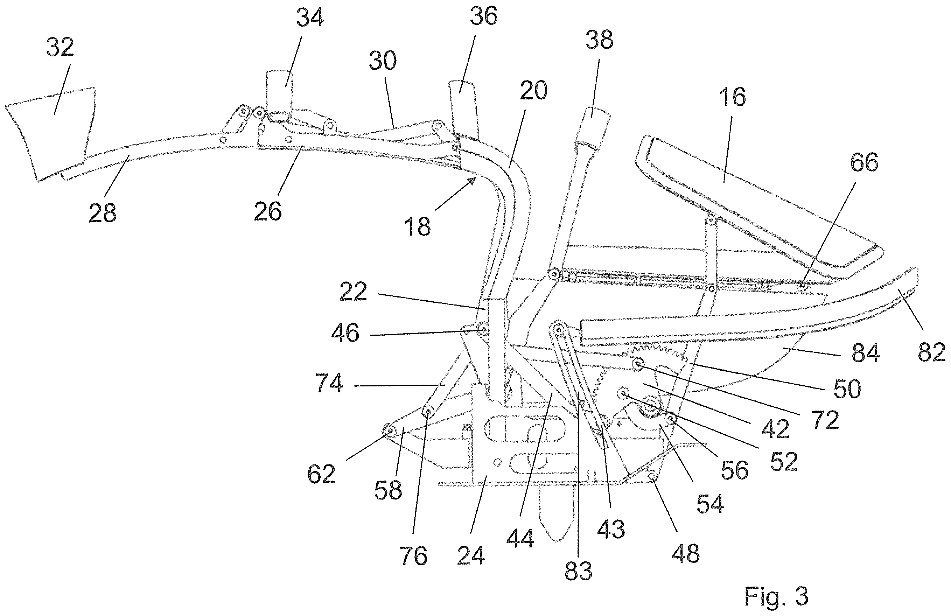

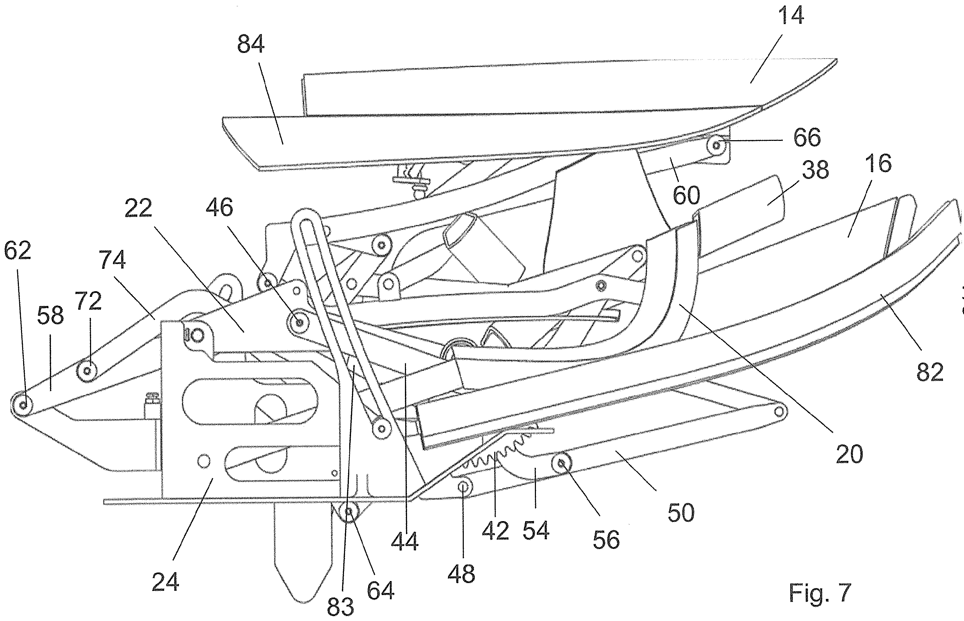

In der Zeichnung ist ein Cabriolet-Verdeck 10 dargestellt, das als Faltverdeck ausgebildet ist und ein Verdeckgestänge 12 aufweist, mittels dessen ein hier nicht näher dargestellter Verdeckbezug aufspannbar ist. Das Verdeckgestänge 12 ist zwischen einer in den Figuren 1 und 3 dargestellten Schließstellung, in der ein Fahrzeuginnenraum eines hier nicht näher dargestellten Cabriolet-Fahrzeugs überspannt ist, und einer in den Figuren 2 und 7 dargestellten Ablagestellung verstellbar, in der das Verdeck in einem heckseitigen Verdeckablageraum des betreffenden Fahrzeugs aufgenommen ist. Der Verdeckablageraum ist mittels eines Ablageraumdeckels 14 verschließbar, der in der Schließstellung des Verdecks eine vom Fahrzeuginnenraum aus erreichbare, heckseitige Hutablage bildet, die unterhalb einer Heckscheibe 16 angeordnet ist.

Der Übersichtlichkeit halber ist das Verdeck 10 in der Zeichnung nur anhand des bezogen auf die Vorwärtsfahrtrichtung des betreffenden Fahrzeugs links angeordneten Verdeckbereiche dargestellt. Die bezogen auf die Vorwärtsfahrtrichtung rechts angeordneten Verdeckbereiche sind bezogen auf eine vertikale Verdecklängsmittelebene spiegelsymmetrisch hierzu ausgebildet und ergeben sich aus der nachfolgenden Beschreibung daher ebenfalls zwanglos.

Das Verdeckgestänge umfasst bezogen auf die vertikale Verdecklängsmittelebene beidseits jeweils eine im Wesentlichen in Fahrzeuglängsrichtung ausgerichtete Gestängeanordnung 18, die eine Hauptsäule 20 und einen Hauptlenker 22 aufweist, welche beide schwenkbar an einem jeweiligen fahrzeugfesten, hier einteiligen Hauptlager 24 gelagert sind. Die Gestängeanordnungen 18 umfassen des Weiteren jeweils ein mittleres Dachrahmenelement 26 und ein vorderes Dachrahmenelement 28. Das mittlere Dachrahmenelement 26 bildet zusammen mit der Hauptsäule 20, dem Hauptlenker 22 und dem Hauptlager 24 ein Hauptviergelenk. Das vordere Dachrahmenelement 28 ist mittels einer Koppellenkeranordnung 30 gegenüber dem mittleren Dachrahmenelement 26 verstellbar. Die Verstellbewegung wird durch ein Verschwenken der Hauptsäule 20 und des Hauptlenkers 22 ausgelöst.

Zwischen den beidseits angeordneten Gestängeanordnungen 18 erstrecken sich ein Frontspriegel 32, zwei Mittelspriegel 34 und 36 sowie ein so genannter Eckspriegel 38, der einen Übergang zwischen dem eigentlichen Dachabschnitt des Verdecks 10 und einem Heckscheibenabschnitt des Verdecks 10 in dessen Schließstellung definiert.

Zum Antrieb der Gestängeanordnung 18 ist an dem Hauptlager 24 ein als Elektromotor ausgebildeter Hauptantrieb 40 angeordnet, der über ein Antriebsritzel eine Antriebsscheibe 42 antreibt, die als Zahnradsegment ausgebildet ist und drehbar an dem Hauptlager 24 gelagert ist. An die Antriebsscheibe 42 ist an der Außenseite über einen Anlenkpunkt 43 ein Antriebslenker 44 angelenkt, der mit seinem der Antriebsscheibe 42 abgewandten Ende über einen Gelenkpunkt 46 an dem Hauptlenker 22 angelenkt ist.

An dem Hauptlager 24 ist des Weiteren über einen Gelenkpunkt 48 ein Heckscheibenlenker 50 angelenkt, an dem die Heckscheibe 16 gelagert ist. Um die Heckscheibe 16 beim Verstellen des Verdecks ebenfalls verstellen zu können, weist die Antriebsscheibe 42 einen Anlenkpunkt 52 für einen Antriebslenker 54 auf, der über einen Gelenkpunkt 56 an den Heckscheibenlenker 50 angebunden ist.

Der Ablageraumdeckel 14 ist über eine Viergelenkanordnung, die zwei Deckellenker 58 und 60 umfasst, über zwei Gelenke 62 und 64 an das Hauptlager 24 angelenkt. Mit ihren den Gelenken 62 und 64 abgewandten Enden sind die Deckellenker 58 und 60 über zwei Gelenkpunkte 66 und 68 an eine Basisplatte bzw. Basiskonstruktion 70 des Ablageraumdeckels 14 angelenkt. Zum Verschwenken des Ablageraumdeckels 14 gegenüber dem Hauptlager 24 weist die Antriebsscheibe 42 einen weiteren Anlenkpunkt 72 für einen Antriebslenker 74 auf, welcher in einem Gelenkpunkt 76 an den Deckellenker 58 angelenkt ist.

Durch die Anbindung der Antriebslenker 44, 54 und 74 an die Antriebsscheibe 42 ist es also möglich, durch den Hauptantrieb 40 sowohl die Gestängeanordnung 18 als auch die Heckscheibe 16 als auch den Ablageraumdeckel 14 gegenüber dem Hauptlager 24 zu verschwenken.

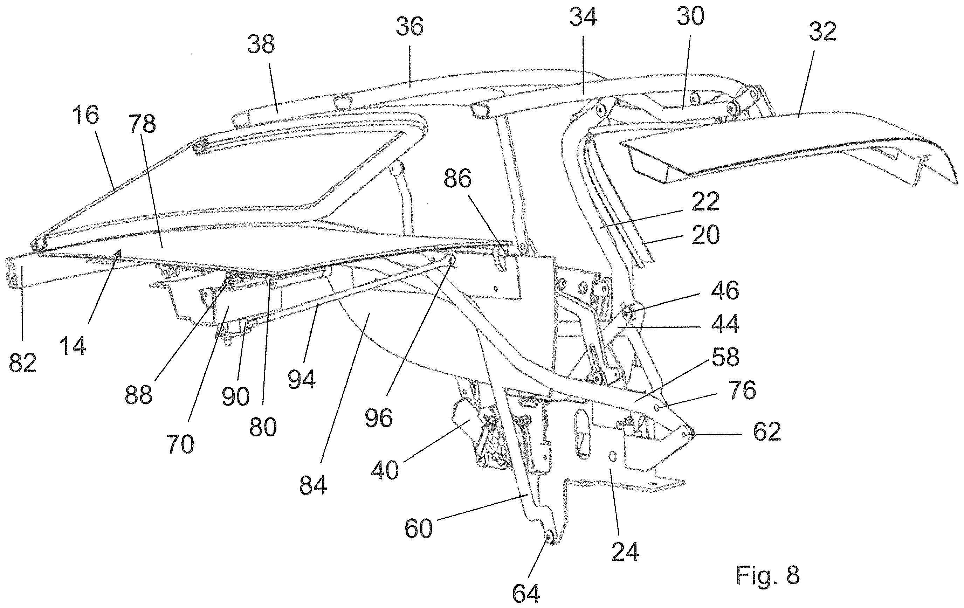

Wie bereits oben ausgeführt, umfasst der Ablageraumdeckel 14 eine Basisplatte 70, an der die Deckellenker 58 und 60 angelenkt sind. Des Weiteren umfasst der Ablageraumdeckel 14 eine Deckplatte 78, die die Sichtfläche des Ablageraumdeckels 14 bildet und über eine sich in Fahrzeug- bzw. Verdeckquerrichtung erstreckende Schwenkachse 80 zwischen einer in den Figuren 1, 3 und 8 dargestellten Absenkstellung und einer in den Figuren 2 und 7 dargestellten Hubstellung verstellbar ist. In der Absenkstellung ist zwischen dem heckseitigen Rand der Deckplatte 78 und einem hieran heckseitig angrenzenden Karosseriebauteil, wie einem Kofferraumdeckel, ein Spalt ausgebildet, so dass der Verdeckbezug durch den Spalt zu einem heckseitigen Spannbügel 82 durchtreten kann, der von der Unterseite an dem heckseitigen Bauteil anliegt und den Verdeckbezug in Verdecklängsrichtung in Spannung hält. In der Hubstellung der Deckplatte 78 des Ablageraumdeckels 14 ist dieser Spalt geschlossen, da sämtliche Verdeckgestängeelemente und der Verdeckbezug in dem Verdeckablageraum angeordnet sind. Der Spannbügel 82 ist in Führungsbahnen 83 der Hauptlager 24 schwenkbar gelagert.

An die Basisplatte 70 des Ablageraumdeckels 14 ist bezogen auf die vertikale Verdecklängsmittelebene beidseits jeweils eine Gestängeaustrittsklappe 84 über eine Schwenkachse 86 angelenkt, die sich in Fahrzeuglängsrichtung erstreckt. Die Gestängeaustrittsklappen 84 sind zwischen einer nach unten geklappten Durchlassstellung, in der die Gestängeanordnungen 18 aus dem Verdeckablageraum austreten, und einer nach oben geklappten Abdeckstellung (Figuren 2 und 7) verschwenkbar, in der der Ablageraum vollständig von dem Ablageraumdeckel 14 verschlossen ist. Die Gestängeaustrittsklappen 84 fluchten dann mit der ein Mittelteil des Ablageraumdeckels 14 darstellenden Deckplatte 78.

Um die Gestängeaustrittsklappen 84 und die Deckplatte 78 gemeinsam gegenüber der Basisplatte 70 verschwenken zu können, ist an der Basisplatte 70 ein Antriebsmotor 88 befestigt, dessen Antriebswelle mit einem Mehrfachkopplungselement 90 versehen ist, das drei Kugelköpfe 91, 92 und 93 aufweist, an denen jeweils eine Schubstange 94 bzw. 95 angelenkt ist, wobei in der Zeichnung nur die Schubstange für eine der Gestängeaustrittsklappen 84 dargestellt ist. Die Schubstangen 94 führen jeweils zu einem Gelenk 96 der jeweiligen Gestängeaustrittsklappe 84. Die Schubstange 95 führt zu einem Gelenk 97, das an einer aus zwei gelenkig miteinander verbundenen Hebeln einer Hebelanordnung 98 ausgebildet ist, die einerseits über ein Gelenk 99 an der Basisplatte 70 und andererseits über ein Gelenk 100 an der Deckplatte 78 angelenkt ist.

Eine Betätigung des Antriebsmotors 88 führt damit über das Mehrfachkopplungselement 90 und die Schubstangen 94 und 95 zu einem Verschwenken der beidseits angeordneten Gestängeaustrittsklappen 84 und der Deckplatte 78 gegenüber der Basisplatte 70.

### Bezugszeichenliste

- 10: Cabriolet-Verdeck
- 12: Verdeckgestänge
- 14: Ablageraumdeckel
- 16: Heckscheibe
- 18: Gestängeanordnung
- 20: Hauptsäule
- 22: Hauptlenker
- 24: Hauptlager
- 26: mittleres Dachrahmenelement
- 28: vorderes Dachrahmenelement
- 30: Koppellenkeranordnung
- 32: Frontspriegel
- 34: Mittel spriegel
- 36: Mittelspriegel
- 38: Eckspriegel
- 40: Hauptantrieb
- 42: Antriebsscheibe
- 43: Anlenkpunkt
- 44: Antriebslenker
- 46: Gelenkpunkt
- 48: Gelenkpunkt
- 50: Heckscheibenlenker
- 52: Anlenkpunkt
- 54: Antriebslenker
- 56: Gelenkpunkt
- 58: Deckellenker
- 60: Deckellenker
- 62: Gelenk
- 64: Gelenk
- 66: Gelenkpunkt
- 68: Gelenkpunkt
- 70: Basisplatte
- 72: Anlenkpunkt
- 74: Antriebslenker
- 76: Gelenkpunkt
- 78: Deckplatte
- 80: Schwenkachse
- 82: Spannbügel
- 83: Führungsbahn
- 84: Gestängeaustrittsklappe
- 86: Schwenkachse
- 88: Antriebsmotor
- 90: Mehrfachkopplungselement
- 91: Kugelkopf
- 92: Kugelkopf
- 93: Kugelkopf
- 94: Schubstange
- 95: Schubstange
- 96: Gelenk
- 97: Gelenk
- 98: Hebelanordnung
- 99: Gelenk
- 100: Gelenk

## Patentansprüche

1. Verdeck eines Cabriolet-Fahrzeugs, umfassend ein Verdeckgestänge (12), das zwischen einer einen Fahrzeuginnenraum überspannenden Schließstellung und einer Ablagestellung verstellbar ist, in der der Fahrzeuginnenraum nach oben freigegeben ist und das Verdeckgestänge (12) in einem heckseitigen Ablageraum abgelegt ist, der mittels eines verstellbaren Ablageraumdeckels (14) verschließbar ist, der bezogen auf eine vertikale Verdecklängsmittelebene beidseits jeweils mit einer Gestängeaustrittsklappe (84) versehen ist, die zwischen einer nach unten weggeklappten Durchlassstellung und einer nach oben geklappten Abdeckstellung verstellbar ist, wobei das Verdeckgestänge (12) bezogen auf die vertikale Verdecklängsmittelebene beidseits jeweils eine Gestängeanordnung (18) aufweist, die an einem jeweiligen fahrzeugfesten, ein- oder mehrteiligen Hauptlager (24) schwenkbar gelagert ist, **dadurch gekennzeichnet, dass** der Ablageraumdeckel (14) eine Basiskonstruktion (70) und eine gegenüber der Basiskonstruktion (70) verschwenkbare Deckplatte (78) umfasst, und dass die Deckplatte (78) und die Gestängeaustrittsklappen (84) mittels eines gemeinsamen Antriebsmotors (88) gegenüber der Basiskonstruktion (70) verschwenkbar sind.

2. Verdeck nach Anspruch 1, **dadurch gekennzeichnet, dass** der Antriebsmotor (88) an der Basiskonstruktion (70) angeordnet ist.

3. Verdeck nach Anspruch 1 oder 2, **dadurch gekennzeichnet, dass** der Antriebsmotor (88) jeweils über eine Schubstange (94, 95) mit den Gestängeaustrittsklappen (84) und mit der Deckplatte (78) verbunden ist.

4. Verdeck nach Anspruch 3, **dadurch gekennzeichnet, dass** die Schubstangen (94, 95) jeweils über einen Kugelkopf (91, 92, 93) an einem Kopplungselement einer Antriebswelle des Antriebsmotors (88) angebunden sind.

5. Verdeck nach Anspruch 3 oder 4, **dadurch gekennzeichnet, dass** die Schubstange (95) für die Deckplatte (78) mit einer Hebelanordnung (98) verbunden ist, die einerseits an der Basiskonstruktion (70) und andererseits an der Deckplatte (78) angelenkt ist.

6. Verdeck nach einem der Ansprüche 1 bis 5, **dadurch gekennzeichnet, dass** es ein Faltverdeck mit einem Verdeckbezug ist und das Verdeckgestänge (12) einen heckseitigen Spannbügel (82) umfasst, der schwenkbar an den beidseits angeordneten Hauptlagern (24) gelagert ist und/oder die beidseits angeordneten Gestängeanordnungen (18) miteinander verbindet.

## Claims

1. A top of a convertible vehicle, comprising a top linkage (12) which is adjustable between a closed position, in which a vehicle interior is covered, and a storage position, in which the vehicle interior is open at the top and the top linkage (12) is stored in a rear-side storage space which can be closed by means of a displaceable storage space lid (14) which is provided with a linkage exit flap (84) on either side of a vertical longitudinal center plane of the top, each linkage exit flap (84) being displaceable between a passage position, in which it is swung downward, and a covering position, in which it is swung upward, the top linkage (12) having a linkage mechanism (18) on either side of the vertical longitudinal center plane of the top, each linkage mechanism (18) being pivotably mounted on a respective main bearing (24) which is attached to the vehicle and made of one or more parts, **characterized in that** the storage space lid (14) has a base structure (70) and a lid plate (78) which can be pivoted relative to the base structure (70), and that the lid plate (87) and the linkage exit flaps (84) can be pivoted relative to the base structure (70) by means of a common drive motor (88).

2. The top according to claim 1, **characterized in that** a drive motor (88) is disposed on the base structure (70).

3. The top according to claim 1 or 2, **characterized in that** the drive motor (88) is connected to the linkage exit flaps (84) and to the lid plate (78) via push rods (94, 95).

4. The top according to claim 3, **characterized in that** each push rod (94, 95) is connected to a coupling element of a drive shaft of the drive motor (88) via a spherical head (91, 92, 93).

5. The top according to claim 3 or 4, **characterized in that** the push rod (95) for the lid plate (78) is connected to a lever mechanism (98) which is articulated to the base structure (70) at one side and to the lid plate (78) at the other side.

6. The top according to any one of claims 1 to 5, **characterized in that** the top is a folding top with a top cover and the top linkage (12) comprises a rear tensioning bow (82) which is pivotably mounted on the main bearings (24) disposed on either side and/or which interconnects the linkage mechanisms (18) disposed on either side.

## Revendications

1. Capote d'un véhicule de cabriolet, comprenant une tringlerie de capote (12) qui peut être déplacée entre une position fermée, dans laquelle un intérieur du véhicule est recouvert, et une position de rangement, dans laquelle l'intérieur du véhicule est révélé en haut et la tringlerie de capote (12) est rangée dans un compartiment de rangement arrière qui peut être fermé au moyen d'un couvercle de compartiment de rangement (14) déplaçable qui est muni d'un clapet de sortie de tringlerie (84) de part et d'autre d'un plan médian longitudinal vertical du capote, chaque clapet de sortie de tringlerie (84) étant déplaçable entre une position de passage, dans laquelle il est rabattu vers le bas, et une position de recouvrement, dans laquelle il est rebattu vers le haut, la tringlerie de capote (12) comprenant un ensemble de tringlerie (18) de part et d'autre du plan central longitudinal vertical du capote, chaque ensemble de tringlerie (18) étant monté de manière pivotante sur un palier principal (24) respectif qui est solidaire du véhicule et fait en une ou plusieurs parties, **caractérisé en ce que** le couvercle de compartiment de rangement (14) comprend une construction de base (70) et une plaque de couverture (78) pivotable par rapport à la construction de base (70) et que la plaque de couverture (78) et les clapets de sortie de tringlerie (84) peuvent être pivotés par rapport à la construction de base (70) au moyen d'un moteur d'entraînement (88) commun.

2. Capote selon la revendication 1, **caractérisé en ce que** le moteur d'entraînement (88) est disposé sur la construction de base (70).

3. Capote selon la revendication 1 ou 2, **caractérisé en ce que** le moteur d'entraînement (88) est relié aux clapets de sortie de tringlerie (84) et à la plaque de couverture (78) par l'intermédiaire des tiges de poussée (94, 95).

4. Capote selon la revendication 3, **caractérisé en ce que** les tiges de poussée (94, 95) sont reliées chacune à un élément de couplage d'un arbre d'entraînement du moteur d'entraînement (88) par l'intermédiaire d'une tête sphérique (91, 92, 93).

5. Capote selon la revendication 3 ou 4, **caractérisé en ce que** la tige de poussée (95) pour la plaque de couverture (78) est reliée à un ensemble de leviers (98) qui est articulé á la construction de base (70) d'un côté et à la plaque de couverture (78) de l'autre côté.

6. Capote selon l'une quelconque des revendications 1 à 5, **caractérisé en ce que** c'est une capote pliante ayant un revêtement de capote et la tringlerie de capote (12) comprend un étrier de tension (82) arrière qui est monté de manière pivotante sur les paliers principaux (24) disposés des deux côtés et/ou qui relie les ensembles de tringlerie (18) disposés des deux côtés.
